# EUROPEAN PATENT SPECIFICATION

(11) **EP 3 975 481 B1**
(45) Date of publication and mention of the grant of the patent: **26.06.2024**
(21) Application number: 20898040.9
(22) Date of filing: 23.09.2020
(51) Int. Cl.: H04L 41/084, H04L 41/0806, H04L 41/34, H04L 43/08, H04L 41/0213, H04L 41/0273

(54) **DATA ACQUISITION METHOD AND APPARATUS, COMPUTER DEVICE, AND COMPUTER-READABLE MEDIUM**
VERFAHREN UND VORRICHTUNG ZUR DATENERFASSUNG, COMPUTERVORRICHTUNG UND COMPUTERLESBARES MEDIUM
PROCÉDÉ ET APPAREIL D'ACQUISITION DE DONNÉES, DISPOSITIF INFORMATIQUE ET SUPPORT LISIBLE PAR ORDINATEUR

(30) Priority: 12.12.2019 CN 201911288997
(43) Date of publication of application: 30.03.2022
(73) Proprietor: ZTE Corporation, shenzhen Guangdong 518057 (CN)
(72) Inventor: CHEN, Bo, Shenzhen, Guangdong 518057 (CN); TANG, Wenbin, Shenzhen, Guangdong 518057 (CN); QUAN, Rui, Shenzhen, Guangdong 518057 (CN)
(74) Representative: Zoli, Filippo
(86) International application number: PCT/CN2020/117255
(87) International publication number: WO 2021/114812

(56) References cited:
- WO-A1-2016/095492
- CN-A- 105 610 648
- CN-A- 105 763 352
- CN-A- 106 444 662
- CN-A- 107 276 813
- CN-A- 107 528 870
- CN-A- 108 763 040
- CN-A- 108 880 867
- CN-A- 110 543 409
- CN-A- 110 543 409
- CN-B- 105 610 648
- US-A1- 2013 093 592
- US-A1- 2017 201 425
- US-A1- 2018 359 201

## Description

### TECHNICAL FIELD

Embodiments of the present application relate to the field of communication technologies, and in particular, to a data acquisition method and apparatus, a computer device, and a computer-readable medium.

### BACKGROUND

In a network environment, a monitoring system is an automatic system based on a computer technology, which may acquire data from network related devices and systems, so as to realize functions such as alarm monitoring and performance acquisition.

In a traditional mode, the monitoring system has many disadvantages. For example, a new acquisition object needs to be hard-coded and deployed in an existing monitoring system, which takes a long time to develop and jointly debug. Besides, after deployment, the monitoring system needs to be restarted, thereby affecting operation of services. If an existing acquisition object need to be deployed to another monitoring system, it also need to be re-coded and deployed, which is inefficient. With the development of the network, a variety of new requirements are constantly increasing. It is increasingly difficult to update or repair the functions of the monitoring system, and it is also difficult for the monitoring system to respond to the requirements quickly.

With the advent of the 5th generation wireless systems (5G) era and the cloud era, different levels of cloud deployment and network deployment have been introduced. With the rapid development of hardware and software equipment, it is more difficult for traditional monitoring systems to timely support the monitoring of 5G cloud network equipment and systems.

In US 2018/359201 A1, techniques are described for a near real-time messaging service that provides access to data center event data, including machine data feeds, via dynamically configurable subscription topics. For example, a network services exchange provider or co-location provider ("provider") may deploy a data center and a data center monitoring system that produces event data, including machine data, associated with data center infrastructure assets. The event data may include, for example, alarm data; alert data; tag points describing properties of infrastructure assets such as HVAC (heating ventilation and air conditioning) units, computer room air conditioning units, power supplies, generators, power distribution units, and switchgears; power consumption data points; and environmental sensor data points.

### SUMMARY

In view of the above, according to some embodiments of the present application, a data acquisition method and apparatus, a computer device, and a computer-readable medium are set out in the appended set of claims.

### BRIEF DESCRIPTION OF DRAWINGS

FIG. 1 is a structural diagram of a system to which a data acquisition method according to an embodiment of the present application is applied;
FIG. 2 is a schematic flowchart of the data acquisition method according to an embodiment of the present application;
FIG. 3 is another schematic flowchart of the data acquisition method according to an embodiment of the present application;
FIG. 4 is a schematic flowchart of a data acquisition method according to another embodiment of the present application;
FIG. 5 is a schematic flowchart of data acquisition according to a model file according to still another embodiment of the present application;
FIG. 6a is a schematic diagram of a deployment manner according to another embodiment of the present application;
FIG. 6b is a schematic diagram of a deployment manner according to yet another embodiment of the present application;
FIG. 6c is a schematic diagram of a deployment manner according to another embodiment of the present application;
FIG. 7 is a schematic structural diagram of a processing apparatus according to another embodiment of the present application;
FIG. 8 is a schematic structural diagram of an acquisition apparatus according to yet another embodiment of the present application;
FIG. 9 is a schematic structural diagram of a model defining apparatus according to another embodiment of the present application;
FIG. 10 is a schematic flowchart of the data acquisition method according to an embodiment of the present application; and
FIG. 11 is a schematic structural diagram of a computer device according to an embodiment of the present application.

### DETAILED DESCRIPTION

Some embodiments of the present application will be described more fully below in conjunction with the accompanying drawings. Conversely, the embodiments are provided to make the present application thorough and complete, and to enable those having ordinary skills in the field to fully understand the scope of the present application.

The term "and/or" as used herein includes any and all combinations of one or more related listed items.

The terms used herein are for the purpose of describing specific embodiments only, and are not intended to limit the present application. As used herein, the singular forms of "a" and "the" may also include plural forms, unless otherwise clearly indicated in the context. It should be further understood that the terms "include/comprise" and/or "made of ..." used in the description specify the presence of the features, integers, steps, operations, elements and/or components, but may not exclude the presence or addition of one or more of other features, integers, steps, operations, elements, components and/or their combinations.

The embodiments described herein may be described referring to plan views and/or cross-sectional views by way of ideal schematic diagrams of the present application.

Unless otherwise defined, all terms (including technical and scientific terms) used herein have the same meaning as commonly understood by those having ordinary skill in the art. It will be further understood that terms, such as those defined in commonly used dictionaries, should be interpreted as having a meaning that is consistent with their meaning in the context of the related art and the present application and will not be interpreted in an idealized or overly formal sense unless expressly so defined herein.

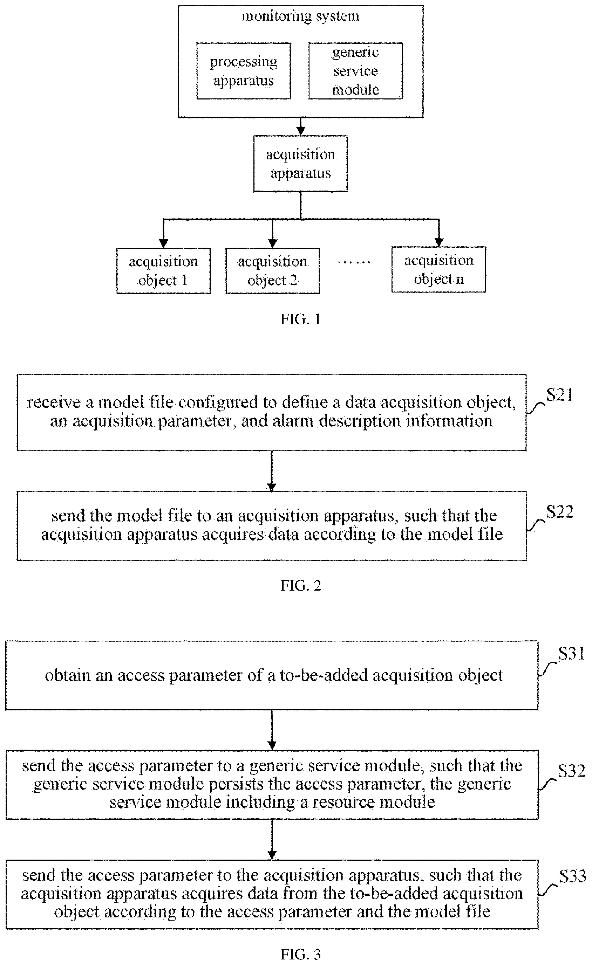

In view of the above existing problems, according to an embodiment of the present application, a data acquisition method is provided. As shown in FIG. 1, the method is applied to a system including a monitoring system, an acquisition apparatus, and an acquisition object. The monitoring system includes a processing apparatus and a generic service module. The acquisition object may be hardware or software that can be managed by the monitoring system through certain communication protocol, for example, a router, a switch, a firewall, a server, a rack/frame, common service software such as My Structure Quest Language (MySQL, a relational database management system), Postgre Structured Query Language (PostgreSQL, an object-relational database management system), Ubuntu, Windows, Apache Kafka (Kafka, a distributed publish and subscribe messaging system) and a File Transfer Protocol (FTP), and cloud platform such as OpenStack (a cloud computing service component) and VMware (a virtual machine software). The acquisition apparatus can acquire data such as resources, performance, and alarms from the acquisition object, and mainly provide acquisition functions of performance acquisition and alarm monitoring. The performance acquisition means acquiring performance data from the acquisition object through a protocol such as Simple Network Management Protocol (SNMP), Secure Shell (SSH) protocol, or Java DataBase Connectivity java (JDBC). The alarm monitoring means monitoring and alarming acquisition objects supporting the SNMP. The processing apparatus can process data uploaded by the acquisition apparatus, and is responsible for transmitting the data to a network management system, a cloud management system or a third-party application. The processing apparatus may be generally deployed as a service, microservice, or plug-in in the network management system, the cloud management system, or a third-party application platform. The generic service module may be a common service module in a monitoring system of the network management system or the cloud management system.

As shown in FIG. 2, the data acquisition method according to an embodiment of the present application may include the following steps.

In a step of S21, a model file is received. The model file is configured to define a data acquisition object, an acquisition parameter(s), and alarm description information.

In this step, a processing apparatus may receive a model file uploaded by a user in a form of a compressed file. The compressed file may include a plurality of model files, which are respectively configured to define the data acquisition object, the acquisition parameter(s), and the alarm description information. The data acquisition object may be defined by defining a network element type (such as a field storing network element) and a component type (such as a field storing component instance) in resources. The acquisition parameter may be defined by defining related performance information of, such as, a measurement counter. For example, the acquisition parameter is defined as a usage rate of a Central Processing Unit/Processor (CPU), a temperature of the CPU, etc. The alarm description information may be defined by defining alarm codes corresponding to various exceptions.

The acquisition object, the acquisition parameter, and the alarm description information are all information required by the acquisition apparatus of the monitoring system to collect device or system data. The data acquisition object, the acquisition parameter, and the alarm description information are defined using the model file. Such information, when needing to be modified or added, may be directly modified in or added to the model file. Therefore, when such information changes, there is no need to recode and deploy the acquisition object.

In a step of S22, the model file is sent to an acquisition apparatus, such that the acquisition apparatus acquires data according to the model file.

In this step, the processing apparatus may directly send the model file to the acquisition apparatus in a form of a compressed file. The acquisition apparatus parses each model file from the compressed file, obtain the data acquisition object, the acquisition parameter, and the alarm description information, and may further acquire data according to such information.

Since the acquisition apparatus may acquire the data according to the model file, if an acquisition requirement (such as add a new type of acquisition parameter) needs to be added, it is only necessary to add corresponding information to the model file. If an acquisition object needs to be monitored in another monitoring system of a same type, a model file of the acquisition object may be reused in the another monitoring system. If data needs to be acquired from a new device, a customized device, or a special device, the acquisition may be realized by modifying or adding the data acquisition object, the acquisition parameter, and the alarm description information in the model file. According to the embodiment of the present application, by flexibly defining model files and online deployment, various devices and systems are acquired faster and can be customized easily, and the online deployment takes effect immediately. When a new device type is connected, the efficiency is improved to achieve an effect of rapid development and rapid connection, thereby saving the time of development, joint debugging and deployment, and improving the ease of use.

It may be found from steps S21-S22 that in the data acquisition method according to the embodiment of the present application, a model file configured to define the data acquisition object, the acquisition parameter, and the alarm description information is received, and the model file is sent to an acquisition apparatus, such that the acquisition apparatus acquires data according to the model file. According to the embodiment of the present application, the acquisition object may be defined using the model file, and the monitoring system and the acquisition object are decoupled. In this way, the model file may take effect after being uploaded to the monitoring system. Therefore, a joint debugging cycle is shortened, the monitoring system does not need to be restarted, and services are not affected. According to the embodiment of the present application, model file definitions may also be reused in other monitoring systems without the need for recoding and deployment. According to the embodiment of the present application, functions of the monitoring may also be updated or repaired by redefining a model file, so as to quickly respond to changing requirements. The embodiment of the present application is applicable to acquisition objects such as central data centers and edge clouds, and can monitor cloud resources at levels of Infrastructure as a Service (IaaS), Platform as a Service (PaaS), and Software as a Service (SaaS) in various scenarios.

In some embodiments, as shown in FIG. 3, after the step of sending the model file to an acquisition apparatus, the method may further include the following steps.

In a step of S31, an access parameter of a to-be-added acquisition object is obtained.

The generic service module may include a user interface (UI) module. When data of a newly added acquisition object is acquired for the first time, the access parameter of the to-be-added acquisition object may be imported or entered from the UI module. The processing apparatus obtains the access parameter of the to-be-added acquisition object through the UI module.

In an embodiment, a user may upload a model file to the processing apparatus through the UI module. After the processing apparatus sends the model file to the acquisition apparatus, the UI module may dynamically generate a parameter input field according to description of a resource field in the model file, so that the user can fill in the access parameter of the to-be-added acquisition object and send the access parameter to the processing apparatus.

In a step of S32, the access parameter is sent to the generic service module, such that the generic service module persists the access parameter. The generic service module includes a resource module.

The resource module, after receiving the access parameter of the to-be-added acquisition object sent by the processing apparatus, may store the access parameter in a database, so that there is no need to import or enter the access parameter when the data of the acquisition object is reacquired.

In a step of S33, the access parameter is sent to the acquisition apparatus, such that the acquisition apparatus acquires data from the to-be-added acquisition object according to the access parameter and the model file.

In this step, the processing apparatus sends the access parameter to the acquisition apparatus, so that the acquisition apparatus may automatically parse acquisition logic and intelligently acquire data from the acquisition object according to the access parameter in conjunction with the model file sent by the processing apparatus.

In some embodiments, after the step of receiving a model file (i.e., step S21), the method may further include: sending the model file to the generic service module, such that the generic service module loads the model file. In this step, after receiving the model file uploaded by the user in the form of the compressed file, the processing apparatus decompresses the compressed file while sending the model file to the acquisition apparatus, so as to obtain the model file configured to define the data acquisition object, the acquisition parameter, and the alarm description information, and sends the model file to the generic service module, such that the generic service module loads the model file, thereby realizing service monitoring.

In some embodiments, the model file may include: a resource model file configured to define the data acquisition object, a performance model file configured to define the acquisition parameter, and an alarm model file configured to define the alarm description information. The generic service module may include: a resource module, a performance module, and an alarm module. The step of sending the model file to the generic service module, such that the generic service module loads the model file (i.e., step S32) may include: sending the resource model file to the resource module, such that the resource module loads the resource model file; sending the performance model file to the performance module, such that the performance module loads the performance model file; and sending the alarm model file to the alarm module, such that the alarm module loads the alarm model file.

The compressed file may include a resource model file, a performance model file, and an alarm resource model file. The generic service module may further include a resource module, a performance module, and an alarm module. The resource module may be configured to manage the acquisition object. The performance module may be configured to provide performance-related services. The alarm module may be configured to provide alarm-related services. After decompressing the compressed file, the processing apparatus may send such three model files to the corresponding modules, respectively. The modules dynamically load the corresponding model files, so as to display information such as resources, performance, and alarms to the user. At the same time, the database storing resource and performance data may dynamically generate different storage tables according to description of resource and performance fields in the model.

In some embodiments, the model file may further include one or any combination of the following: a script file, a protocol configuration file, and a management information base (MIB) file.

The script file may include one or any combination of the following: an execution script of related protocols used to connect devices and acquire data, a custom script for resources (that is, an access parameter field), a special processing script for parsing alarms, a script for secondary calculation on performance data, a script for calling an external service to acquire data, and other custom special logic scripts. The protocol configuration file may include a configuration file parsing a result returned by a protocol and the like. The model file may also include an MIB file.

It is to be noted that the user may package the script file, the protocol configuration file, and the MIB file with the resource model file, the performance model file, and the alarm model file to generate a compressed package, and send the compressed package to the processing apparatus.

In some embodiments, the step of sending the model file to an acquisition apparatus (i.e., step S22) may include: sending the model file to the acquisition apparatus through a representational state transfer (Restful) interface; additionally or alternatively, the step of sending the model file to the generic service module may include: sending the model file to the generic service module through a Restful interface.

A microservice architecture may be formed by connecting the processing apparatus to the acquisition device, and the processing apparatus to the generic service module, through a uniformly defined Restful interface. The processing apparatus may send the model file or the access parameter to the acquisition apparatus or the generic service module through the Restful interface. The processing apparatus, the acquisition apparatus and the generic service module are independent microservice modules which are loosely coupled, and each microservice module only focuses on completing its own task. When a new requirement is added to the monitoring system, it is only necessary to add or modify the corresponding microservice module, making it easy to update or repair the functions of the monitoring system. Besides, since the microservice architecture is well suited for cloud deployment, it is compatible with applications in a cloud development mode.

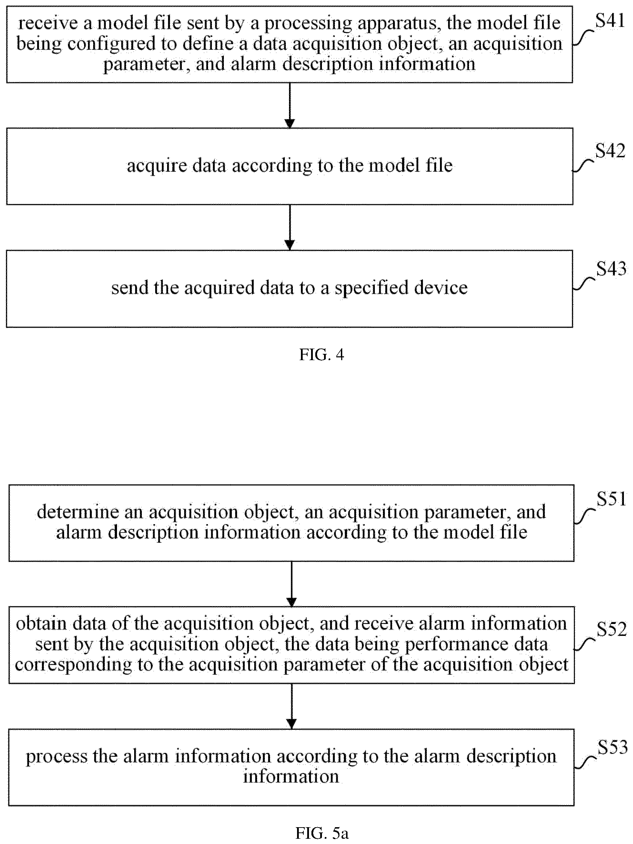

According to an embodiment of the present application, a data acquisition method is further provided. As shown in FIG. 4, the method may include the following steps.

In a step of S41, a model file sent by a processing apparatus is received. The model file is configured to define the data acquisition object, the acquisition parameter, and the alarm description information.

In this step, the processing apparatus may send the model file to the acquisition apparatus in a form of a compressed file.

In a step of S42, data is acquired according to the model file.

In a step of S43, the acquired data is sent to a specified device.

The acquisition apparatus, after receiving the model file sent by the processing apparatus in the form of the compressed file, may directly acquire data according to the acquisition object, the acquisition parameter, and the alarm description information in the model file, and send the acquired data to any specified device such as the processing apparatus or a management system.

In some embodiments, as shown in FIG. 5, the step of acquiring data according to the model file (i.e., step S42) may include the following steps.

In a step of S51, the acquisition object, the acquisition parameter, and the alarm description information are determined according to the model file.

In this step, the acquisition module may determine the acquisition object according to the resource model file, determine the acquisition parameter according to the performance model file, and determine the alarm description information according to the alarm model file. The alarm description information may be an alarm filtering or adaptation parameter.

In a step of S52, data of the acquisition object is obtained, and alarm information sent by the acquisition object is received. The data is performance data corresponding to the acquisition parameter of the acquisition object.

In a step of S53, the alarm information is processed according to the alarm description information.

In this step, the received alarm information is filtered and adapted according to the alarm filtering or adaptation parameter, so as to convert the alarm information into alarm data of a unified model and a unified format.

In this step, the acquisition apparatus may acquire the acquisition parameter of the acquisition object according to an acquisition cycle, and acquire the acquisition object through different docking protocols, to obtain different forms of original data. When an exception occurs, the acquisition apparatus may also receive alarm information sent by the acquisition object.

In some embodiments, after the step of acquiring data according to the model file (i.e., step S42) and prior to the step of sending the acquired data to a specified device (i.e., step S43), the method may further include: abstracting the acquired data to unify the format of the data.

After acquiring the data, the acquisition apparatus abstracts different forms of original data into monitoring data in a unified format through data abstraction capability, which facilitates a specified device to make other application subsequently according to the monitoring data. The acquisition apparatus may also be docked with various monitoring systems due to its generic data abstraction capability and protocol conversion capability.

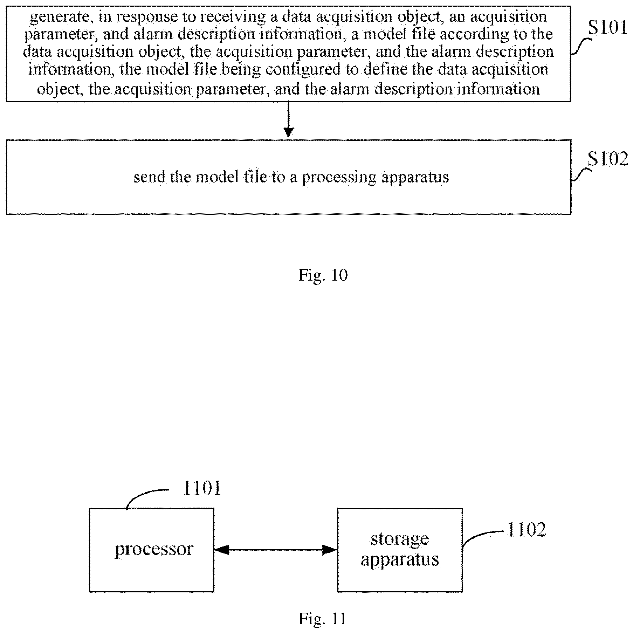

According to an embodiment of the present application, a data acquisition method is further provided. As shown in FIG. 10, the method may include the following steps.

In a step of S101, in response to receiving an acquisition object parameter, an acquisition parameter, and alarm description information, a model file is generated according to the acquisition object parameter, the acquisition parameter, and the alarm description information. The model file is configured to define the data acquisition object, the acquisition parameter, and the alarm description information. In a step of S 102, the model file is sent to a processing apparatus.

A user may define a model file, and upload the model file to the processing apparatus through a UI module. The model file may include information required to collect information such as the data acquisition object, the acquisition parameter, and the alarm description information.

It is to be noted that the acquisition apparatus and the processing apparatus according to the embodiment of the present application may be deployed at the same position or different positions.

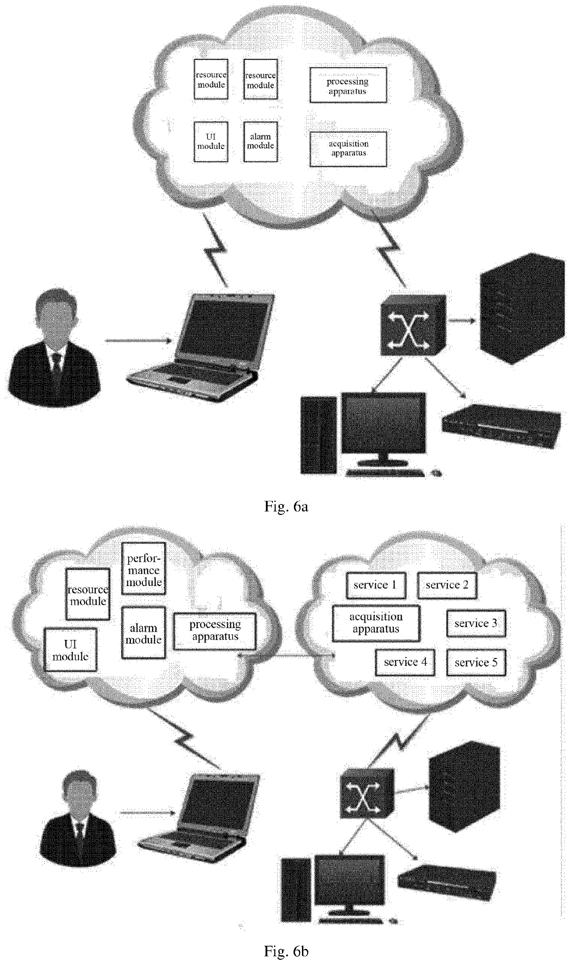

As shown in FIG. 6a, the acquisition apparatus may be deployed in the same cloud platform as the processing apparatus. The acquisition apparatus is connected to the acquisition object through a private network. At the same time, the resource module, the performance module, the alarm module, and the UI module also serve as independent microservices to be deployed in the same cloud platform. In this manner, the microservices are easy to deploy and manage.

As shown in FIG. 6b, the acquisition apparatus may also be deployed in a different cloud platform from the processing apparatus. The acquisition apparatus is connected to the acquisition object through a private network. At the same time, the resource module, the performance module, the alarm module, and the UI module also serve as independent microservices to be deployed in the same cloud platform as adaptation/processing microservices. A service module 1, a service module 2 and other modules are also deployed in the cloud platform where the microservices are deployed. In this manner, the acquisition apparatus and the processing apparatus may be operated and managed separately, resources of two cloud platforms are used respectively, and operation of the acquisition apparatus and operation of the processing apparatus do not interfere with each other.

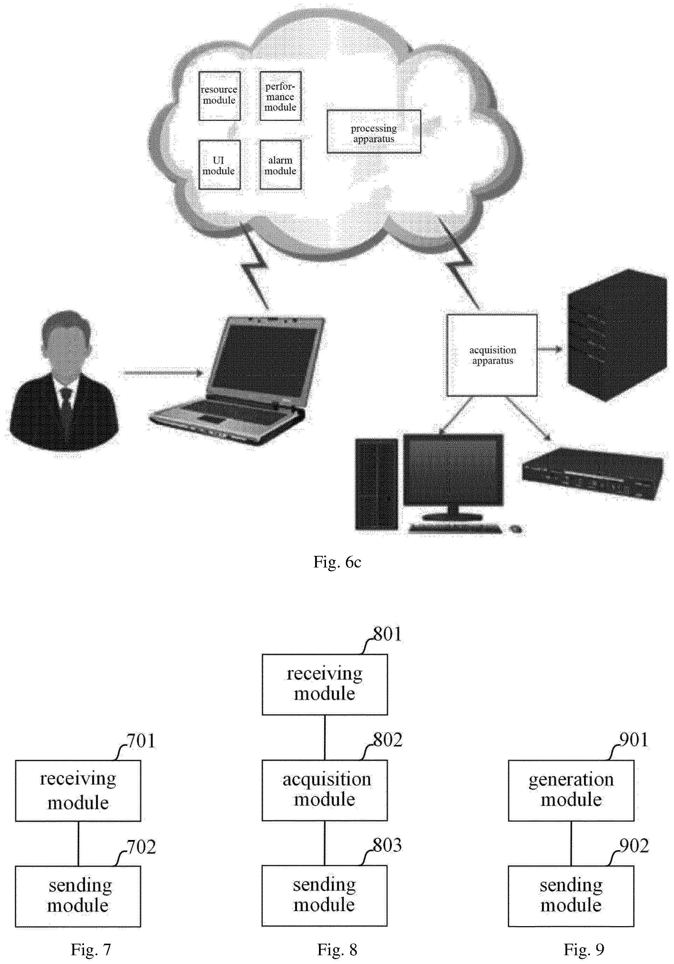

As shown in FIG. 6c, the acquisition apparatus may also be deployed outside the cloud and deployed in the same network as the acquisition object, while the processing apparatus is deployed on a cloud platform. At the same time, the resource module, the performance module, the alarm module, and the UI module also serve as independent microservices to be deployed in the same cloud platform as the adaptation/processing microservices. In this manner, the deployment is flexible and can adapt to complex network scenarios.

According to the data acquisition method and the monitoring system involved in the embodiments of the present application, through the design of microservice architecture, device features are described in the form of model definition files, script files and the like to provide model-driven capabilities. Models defined for different acquisition protocols and acquisition logic encapsulates the complexity of various acquisition protocols, and eliminates the need to support new cloud resource objects through coding. Based on various scenarios such as raw devices, IaaS and PaaS and by using model drive, data of servers, magnetic arrays, routers, switches, firewalls and load balancers in a hardware layer can be acquired, while data of servers, distributed storage and databases in a software layer can be acquired. Data from OpenStack and VMware on the cloud platform can be acquired. In a complex 5G networking environment, alarm monitoring and performance acquisition can be performed on related devices and systems of a 5G cloud network. Data abstraction is performed on various types of acquired data, and a data processing template is provided, so that unified modeling data can be extracted from various types of data. Complex docking protocols can be converted into simple and unified Restful interfaces for use by the monitoring system, facilitating the docking with the monitoring system or an parse system, and the time and cost required for system customization or upgrade are reduced by dynamically loading model files. A model file can be uploaded online and take effect dynamically, which prevents system restart due to deployment operations and can support multiple deployment modes. That is, it can be deployed as an acquisition service in the cloud or outside the cloud, and is suitable for various application scenarios, such as PaaS, IaaS, and single-machine.

Based on the same technical idea, as shown in FIG. 7, according to an embodiment of the present application, a processing apparatus is further provided, including a receiving module 701 and a sending module 702. The receiving module 701 is configured to receive a model file configured to define the data acquisition object, the acquisition parameter, and the alarm description information.

The sending module 702 is configured to send the model file to an acquisition apparatus, such that the acquisition apparatus acquires data according to the model file.

In some embodiments, the processing apparatus may further include an acquisition module configured to obtain the access parameter of the to-be-added acquisition object.

The sending module 702 is further configured to send the access parameter to a generic service module, such that the generic service module persists the access parameter. The generic service module includes a resource module.

And then, the access parameter is sent to the acquisition apparatus, such that the acquisition apparatus acquires data from the to-be-added acquisition object according to the access parameter and the model file.

In some embodiments, the sending module 702 is further configured to send the model file to a generic service module, such that the generic service module loads the model file.

In some embodiments, the model file may include: a resource model file configured to define the data acquisition object, a performance model file configured to define the acquisition parameter, and an alarm model file configured to define the alarm description information. The generic service module may include a resource module, a performance module, and an alarm module.

The sending module 702 is further configured to: send the resource model file to the resource module, such that the resource module loads the resource model file; send the performance model file to the performance module, such that the performance module loads the performance model file; and send the alarm model file to the alarm module, such that the alarm module loads the alarm model file.

In some embodiments, the model file may further include one or any combination of the following: a script file, a protocol configuration file, and an MIB file.

In some embodiments, the sending module 702 is further configured to send the model file to the acquisition apparatus through a Restful interface, additionally or alternatively send the model file to the generic service module through a Restful interface.

As shown in FIG. 8, according to an embodiment of the present application, an acquisition apparatus is further provided, including a receiving module 801, an acquisition module 802, and a sending module 803. The receiving module 801 is configured to receive a model file sent by a processing apparatus. The model file is configured to define the data acquisition object, the acquisition parameter, and the alarm description information.

The acquisition module 802 is configured to acquire data according to the model file.

The sending module 803 is configured to send the acquired data to a specified device.

In some embodiments, the acquisition module 802 is configured to determine the acquisition object, the acquisition parameter, and the alarm description information according to the model file; obtain data of the acquisition object, and receive alarm information sent by the acquisition object, where the data is performance data corresponding to the acquisition parameter of the acquisition object; and process the alarm information according to the alarm description information.

In some embodiments, the acquisition apparatus may further include a processing module configured to abstract the acquired data to unify a format of the data.

As shown in FIG. 9, according to an embodiment of the present application, a model defining apparatus is further provided, including a generation module 901 and a sending module 902. The generation module 901 is configured to generate, in response to receiving the acquisition object parameter, the acquisition parameter, the alarm description information, the model file according to the acquisition object parameter, the acquisition parameter, and the alarm description information. The model file is configured to define the data acquisition object, the acquisition parameter, and the alarm description information.

The sending module 902 is configured to send the model file to a processing apparatus.

According to an embodiment of the present application, a computer device is further provided, including one or more processors 1101 and a storage apparatus 1102, as shown in FIG. 11. The storage apparatus 1102 stores one or more programs which, when executed by the one or more processors 1101, cause the one or more processors 1101 to carry out the data acquisition method according to each of the above embodiments.

According to an embodiment of the present application, a computer-readable medium storing a computer program is further provided, where the computer program, when executed by a processor, causes the processor to carry out the data acquisition method according to each of the above embodiments.

In the data acquisition method according to the embodiment of the present application, a model file configured to define the data acquisition object, the acquisition parameter, and the alarm description information is received, and the model file is sent to an acquisition apparatus, such that the acquisition apparatus acquires data according to the model file. According to the embodiment of the present application, the acquisition object may be defined using the model file, and the monitoring system and the acquisition object are decoupled. In this way, the model file may take effect after being uploaded to the monitoring system. Therefore, a joint debugging cycle is shortened, the monitoring system does not need to be restarted, and services are not affected. According to the embodiment of the present application, model file definitions may also be reused in other monitoring systems without the need for recoding and deployment. According to the embodiment of the present application, functions of the monitoring systems may also be updated or repaired by redefining a model file, so as to quickly respond to changing requirements. The embodiment of the present application is applicable to acquisition objects such as central data centers and edge clouds, and can monitor cloud resources at levels of IaaS, PaaS, and SaaS in various scenarios.

Those having ordinary skills in the art may understand that all or some of the steps in the method and the functional modules/units in the apparatus disclosed above may be implemented as software, firmware, hardware and appropriate combinations thereof. In a hardware implementation, the division between the functional modules/units mentioned in the above description does not necessarily correspond to the division of physical components. For example, one physical component may have multiple functions, or one function or step may be jointly performed by a plurality of physical components. Some or all of the physical components may be implemented as software executed by a processor such as a central processing unit, a digital signal processor or a microprocessor, or may be implemented as hardware or an integrated circuit such as an application-specific integrated circuit. Such software may be distributed on a computer-readable medium, which may include a computer storage medium (or non-transitory medium) and a communication medium (or a transitory medium). As is well known to those of ordinary skill in the art, the term "computer storage medium" includes volatile and nonvolatile, removable and non-removable media implemented in any method or technology for storing information (such as computer-readable instructions, data structures, program modules, or other data). The computer storage medium includes, but is not limited to, RAM, ROM, EEPROM, flash memory or other memory technologies, CD-ROM, DVD or other optical storage, magnetic cassette, magnetic tape, magnetic disk storage or other magnetic storage apparatuses, or any other media that can be configured for storing desired information and can be accessed by a computer. Furthermore, as is well known to those having ordinary skills in the art, the communication medium typically includes computer-readable instructions, data structures, program modules or other data in a modulated data signal such as a carrier wave or other transport mechanisms, and may include any information delivery medium.

## Claims

1. A data acquisition method, comprising:
receiving (S21) a model file configured to define a data acquisition object, an acquisition parameter, and alarm description information; and
sending (S22) the model file to an acquisition apparatus;
obtaining (S31) an access parameter of a to-be-added acquisition object;
sending (S32) the access parameter to a generic service module comprising a resource module, such that the generic service module persists the access parameter; and
sending (S33) the access parameter to the acquisition apparatus, such that the acquisition apparatus acquires data from the to-be-added acquisition object according to the access parameter and the model file.

2. The method of claim 1, after the step of receiving a model file, further comprising:
sending the model file to a generic service module, such that the generic service module loads the model file.

3. The method of claim 2, wherein the model file comprises: a resource model file configured to define the data acquisition object, a performance model file configured to define the acquisition parameter, and an alarm model file configured to define the alarm description information; and the generic service module comprises a resource module, a performance module, and an alarm module; and
wherein the model file is sent to a generic service module, such that the generic service module loads the model file comprises following steps:
wherein the resource model file is sent to the resource module, such that the resource module loads the resource model file; the performance model file is sent to the performance module, such that the performance module loads the performance model file; and the alarm model file is sent to the alarm module, such that the alarm module loads the alarm model file.

4. The method of claim 3, wherein the model file further comprises one or any combination of the following: a script file, a protocol configuration file, and a management information base file.

5. The method of any one of claims 2-4, wherein the step of sending the model file to an acquisition apparatus comprises: sending the model file to the acquisition apparatus through a representational state transfer interface; and/or the step of sending the model file to a generic service module comprises: sending the model file to the generic service module through a representational state transfer interface.

6. A processing apparatus, comprising:
a receiving module (701) configured to receive a model file configured to define a data acquisition object, an acquisition parameter, and alarm description information;
an acquisition module configured to obtain an access parameter of a to-be-added acquisition object; and
a sending module (702) configured to send the model file and the access parameter to an acquisition apparatus, such that the acquisition apparatus acquires data from the to-be-added acquisition object according to the access parameter and the model file, and further configured to send the access parameter to a generic service module such that the generic service module persists the access parameter.

7. A computer device, comprising:
a processors (1101); and
a storage apparatus (1102) storing a program; wherein
the programs, when executed by the processor (1101), cause the processor (1101) to carry out the data acquisition method of any one of claims 1-5.

8. A computer-readable medium, storing a computer program, which when executed by a processor, causes the processor to carry out the data acquisition method of any one of claims 1-5.

## Patentansprüche

1. Datenerfassungsverfahren, umfassend:
Empfangen (S21) einer Modelldatei, die konfiguriert ist, um ein Datenerfassungsobjekt, einen Erfassungsparameter und Alarmbeschreibungsinformationen zu definieren; und
Senden (S22) der Modelldatei an ein Erfassungsgerät;
Erlangen (S31) eines Zugriffsparameters eines hinzuzufügenden Erfassungsobjekts;
Senden (S32) des Zugriffsparameters an ein generisches Dienstmodul, umfassend ein Ressourcenmodul, sodass das generische Dienstmodul den Zugriffsparameter beibehält; und
Senden (S33) des Zugriffsparameters an die Erfassungsvorrichtung, sodass die Erfassungsvorrichtung Daten gemäß dem Zugriffsparameter und der Modelldatei von dem hinzuzufügenden Erfassungsobjekt erfasst.

2. Verfahren nach Anspruch 1, das nach dem Schritt eines Empfangens einer Modelldatei ferner Folgendes umfasst:
Senden der Modelldatei an ein generisches Dienstmodul, sodass das generische Dienstmodul die Modelldatei lädt.

3. Verfahren nach Anspruch 2, wobei die Modelldatei Folgendes umfasst: eine Ressourcenmodelldatei, die konfiguriert ist, um das Datenerfassungsobjekt zu definieren, eine Leistungsmodelldatei, die konfiguriert ist, um den Erfassungsparameter zu definieren, und eine Alarmmodelldatei, die konfiguriert ist, um die Alarmbeschreibungsinformationen zu definieren; und das generische Dienstmodul ein Ressourcenmodul, ein Leistungsmodul und ein Alarmmodul umfasst; und
wobei die Modelldatei an ein generisches Dienstmodul gesendet wird, sodass das generische Dienstmodul die Modelldatei lädt folgende Schritte umfasst:
wobei die Ressourcenmodelldatei an das Ressourcenmodul gesendet wird, sodass das Ressourcenmodul die Ressourcenmodelldatei lädt; die Leistungsmodelldatei an das Leistungsmodul gesendet wird, sodass das Leistungsmodul die Leistungsmodelldatei lädt;
und die Alarmmodelldatei an das Alarmmodul gesendet wird, sodass das Alarmmodul die Alarmmodelldatei lädt.

4. Verfahren nach Anspruch 3, wobei die Modelldatei ferner eines oder eine beliebige Kombination von Folgenden umfasst: einer Skriptdatei, einer Protokollkonfigurationsdatei und einer Verwaltungsinformationsbasisdatei.

5. Verfahren nach einem der Ansprüche 2-4, wobei der Schritt eines Sendens der Modelldatei an eine Erfassungsvorrichtung Folgendes umfasst: Senden der Modelldatei über eine Darstellungszustand-Übertragungsschnittstelle an die Erfassungsvorrichtung; und/oder der Schritt eines Sendens der Modelldatei an ein generisches Dienstmodul Folgendes umfasst: Senden der Modelldatei Darstellungszustand-Übertragungsschnittstelle an das allgemeine Dienstmodul.

6. Verarbeitungsgerät, umfassend:
ein Empfangsmodul (701), das konfiguriert ist, um eine Modelldatei zu empfangen, die konfiguriert ist, um ein Datenerfassungsobjekt, einen Erfassungsparameter und Alarmbeschreibungsinformationen zu definieren;
ein Erfassungsmodul, das konfiguriert ist, um einen Zugriffsparameter eines hinzuzufügenden Erfassungsobjekts zu erlangen; und
ein Sendemodul (702), das konfiguriert ist, um die Modelldatei und den Zugriffsparameter an eine Erfassungsvorrichtung zu senden, sodass die Erfassungsvorrichtung Daten gemäß dem Zugriffsparameter und der Modelldatei von dem hinzuzufügenden Erfassungsobjekt erfasst, und das ferner konfiguriert ist, um den Zugriffsparameter an ein generisches Dienstmodul zu senden, sodass das generische Dienstmodul den Zugriffsparameter beibehält.

7. Computervorrichtung, umfassend:
einen Prozessor (1101); und
eine Speichervorrichtung (1102), die ein Programm speichert; wobei die Programme, wenn sie von dem Prozessor (1101) ausgeführt werden, den Prozessor (1101) veranlassen, das Datenerfassungsverfahren nach einem der Ansprüche 1-5 durchzuführen.

8. Computerlesbares Medium, das ein Computerprogramm speichert, das, wenn es von einem Prozessor ausgeführt wird, den Prozessor veranlasst, das Datenerfassungsverfahren nach einem der Ansprüche 1-5 durchzuführen.

## Revendications

1. Méthode d'acquisition de données, comprenant :
la réception (S21) d'un fichier de modèle configuré pour définir un objet d'acquisition de données, un paramètre d'acquisition, et des informations de description d'alarme ; et
l'envoi (S22) du fichier de modèle à un appareil d'acquisition ;
l'obtention (S31) d'un paramètre d'accès d'un objet d'acquisition à ajouter ;
l'envoi (S32) du paramètre d'accès à un module de service générique comprenant un module de ressources, de sorte que le module de service générique conserve le paramètre d'accès ; et
l'envoi (S33) du paramètre d'accès à l'appareil d'acquisition, de sorte que l'appareil d'acquisition acquiert des données à partir de l'objet d'acquisition à ajouter en fonction du paramètre d'accès et du fichier modèle.

2. Procédé selon la revendication 1, après l'étape de réception d'un fichier de modèle, comprenant en outre :
l'envoi du fichier de modèle à un module de service générique, de sorte que le module de service générique charge le fichier de modèle.

3. Procédé selon la revendication 2, dans lequel le fichier de modèle comprend : un fichier de modèle de ressource configuré pour définir l'objet d'acquisition de données, un fichier de modèle de performance configuré pour définir le paramètre d'acquisition, et un fichier de modèle d'alarme configuré pour définir les informations de description d'alarme ; et le module de service générique comprend un module de ressource, un module de performance, et un module d'alarme ; et
dans lequel le fichier de modèle est envoyé à un module de service générique, de sorte que le module de service générique charge le fichier de modèle comprend les étapes suivantes :
dans lequel le fichier de modèle de ressource est envoyé au module de ressource, de sorte que le module de ressource charge le fichier de modèle de ressource ; le fichier de modèle de performance est envoyé au module de performance, de sorte que le module de performance charge le fichier de modèle de performance ; et le fichier de modèle d'alarme est envoyé au module d'alarme, de sorte que le module d'alarme charge le fichier de modèle d'alarme.

4. Procédé selon la revendication 3, dans lequel le fichier de modèle comprend en outre un ou une combinaison des éléments suivants : un fichier de script, un fichier de configuration de protocole et un fichier de base d'informations de gestion.

5. Procédé selon l'une quelconque des revendications 2 à 4, dans lequel l'étape d'envoi du fichier de modèle à un appareil d'acquisition comprend : l'envoi du fichier de modèle à l'appareil d'acquisition par l'intermédiaire d'une interface de transfert d'état représentationnel ; et/ou l'étape d'envoi du fichier de modèle à un module de service générique comprend : l'envoi du fichier de modèle au module de service générique par l'intermédiaire d'une interface de transfert d'état représentationnel.

6. Appareil de traitement, comprenant :
un module de réception (701) configuré pour définir un objet d'acquisition de données, un paramètre d'acquisition, et des informations de description d'alarme ;
un module d'acquisition configuré pour obtenir un paramètre d'accès d'un objet d'acquisition à ajouter ; et
un module d'envoi (702) configuré pour envoyer le fichier de modèle et le paramètre d'accès à un appareil d'acquisition, de sorte que l'appareil d'acquisition acquiert des données à partir de l'objet d'acquisition à ajouter en fonction du paramètre d'accès et du fichier de modèle, et configuré en outre pour envoyer le paramètre d'accès à un module de service générique de sorte que le module de service générique conserve le paramètre d'accès.

7. Dispositif informatique, comprenant :
un processeur (1101) ; et
un appareil de stockage (1102) qui stocke un programme ; dans lequel
lorsque les programmes sont exécutés par le processeur (1101), ils permettent au processeur (1101) de mettre en oeuvre la méthode d'acquisition de données selon l'une des revendications 1 à 5.

8. Support lisible par ordinateur, stockant un programme informatique qui, lorsqu'il est exécuté par un processeur, permet à ce dernier de mettre en oeuvre la méthode d'acquisition de données selon l'une quelconque des revendications 1 à 5.
